# EUROPEAN PATENT SPECIFICATION

(11) **EP 1 174 313 B1**
(45) Date of publication and mention of the grant of the patent: **16.06.2004**
(21) Application number: 01306158.5
(22) Date of filing: 18.07.2001
(51) Int. Cl.: B60R 21/20, B60R 21/26

(54) **Multi-chamber inflator**
Mehrkammergasgenerator
Générateur de gaz à compartiments multiples

(30) Priority: 18.07.2000 US 219252 P
(43) Date of publication of application: 23.01.2002
(73) Proprietor: AUTOMOTIVE SYSTEMS LABORATORY INC., Farmington Hills Michigan 48331 (US)
(72) Inventor: Whang, David S., Bloomfield Hills, Michigan 48302 (US); Quioc, Eduardo, Westland, Michigan 48186 (US); Stratton, Rick L., Pontiac, Michigan 48341 (US)
(74) Representative: Smith, Samuel Leonard

(56) References cited:
- EP-A- 0 787 630
- DE-A- 19 620 758
- US-A- 5 863 066
- US-A- 6 032 979

## Description

### BACKGROUND OF THE INVENTION

The present invention relates to gas generators, used to inflate air bags in a vehicle occupant protection system for example, and more particularly, to an improved dual chamber gas generator containing an improved structure for isolating the propellant chambers of a dual chamber inflator so as to ensure proper deployment of the airbag.

Inflation. systems for deploying an air bag in a motor vehicle generally employ a single gas generator in fluid communication with an uninflated air bag. A firing circuit typically triggers the gas generator when the sensed vehicle acceleration exceeds a predetermined threshold value, as through the use of an acceleration-responsive inertial switch.

However, air bag inflation systems utilizing a single gas generator suffer from the disadvantage that the onset pressurization/inflation rate is generally set to provide aggressive initial inflation in order to achieve a particular inflation time related to occupant position. An aggressive onset rate of pressurization becomes problematic in situations where the occupant is out of position. More specifically, rapid onset pressurization of the air bag can cause the air bag to impact against the occupant with enough force to injure the occupant. The airbag volume and inflating capacity are designed to protect both large and small occupants and are generally not variable within the single gas generator. Occasionally, when an air bag utilizing a single gas generator is deployed, smaller occupants, usually children and smaller women, have been seriously injured.

Commonly owned U.S. Patent No. 5,400,487 discloses an inflation system which overcomes the above problem by utilizing a plurality of gas generators which are controllably ignited to provide a variable inflation profile which can be tailored to any given occupant weight and/or position and for any crash type. While this arrangement dramatically improves the inflation system's ability to protect an occupant, it does so at significant expense and complexity. The multiple gas generators and squibs add considerable cost to the system, while the firing control circuitry requires sophisticated processors capable of accurately timing the various ignition profiles.

Another proposal, as taught in commonly owned U.S. Patent No. 5,934,705, is a gas generator having two chambers in a single housing defined by a mechanically retained wall between the ends thereof. Each housing is of a predetermined size that is determinative of the propellant capacity and consequently, of the inflating capability of each chamber. Upon the occurrence of a vehicle collision, depending on the weight of the passenger, either chamber or both may be selectively ignited thereby inflating the protective airbag. However, the structural integrity of such a known dual chamber inflator, may be compromised by failure of the wall separating the chambers when only one chamber is fired.

Given the above, typical dual chamber inflators often require a more robust design, resulting in relatively higher costs and more complicated manufacturing as compared to a single chamber inflator.

Therefore, a need exists for a dual chamber gas generator that exhibits a simplified design and therefore lower material and manufacturing costs, and yet can still produce selective air bag inflation pressurization without hazardous structural failure of the gas generator.

EP-A-0787630, upon which the precharacterising portions of appended claims 1 and 2 are based, describes a hybrid inflator having a main chamber containing compressed gas and two subchambers containing heating material which is selectively ignitable by respective squibs.

US 6,032,979 describes an inflator having two discrete isolated chambers of gas generant materials permitting several distinct inflation performance scenarios.

WO 00/68043 discloses a dual chamber inflator having two combustion chambers inside a housing. Inside each chamber is an igniter chamber containing an igniter and propellant grains

### SUMMARY OF THE INVENTION

According to the present invention, there is provided an inflator as defined in appended claims 1 and 2.

Complete isolation of the chambers of a dual chamber airbag inflator is critical to soft deployment of the airbag. Accordingly, the present invention relates to an improved structure for isolating the propellant chambers of a dual chamber inflator so as to insure proper deployment. Specifically, a cup shaped housing contains a primary propellant chamber and also a two-section igniter assembly containing two ignition chambers therein. Specifically, a two-section igniter assembly is employed to define the dual chambers of the inflator and positively isolate the propellants therein.

The two-section igniter assembly is a structural component of the inflator pressure vessel. The inflator can be configured to ignite the propellants in the dual chambers simultaneously or with a delay between ignition depending on the severity of the crash.

### BRIEF DESCRIPTON OF THE DRAWINGS

Figure 1 is a cross-sectional top view of a two-chamber inflator in accordance with the present invention.
Figure 2 is a cross-sectional view taken along the line 2-2 of Figure 1.
Figure 3 is a view of the inflator prior to finished assembly.

### DETAILED DESCRIPTION OF THE PREFERRED EMBODIMENT OF THE INVENTION

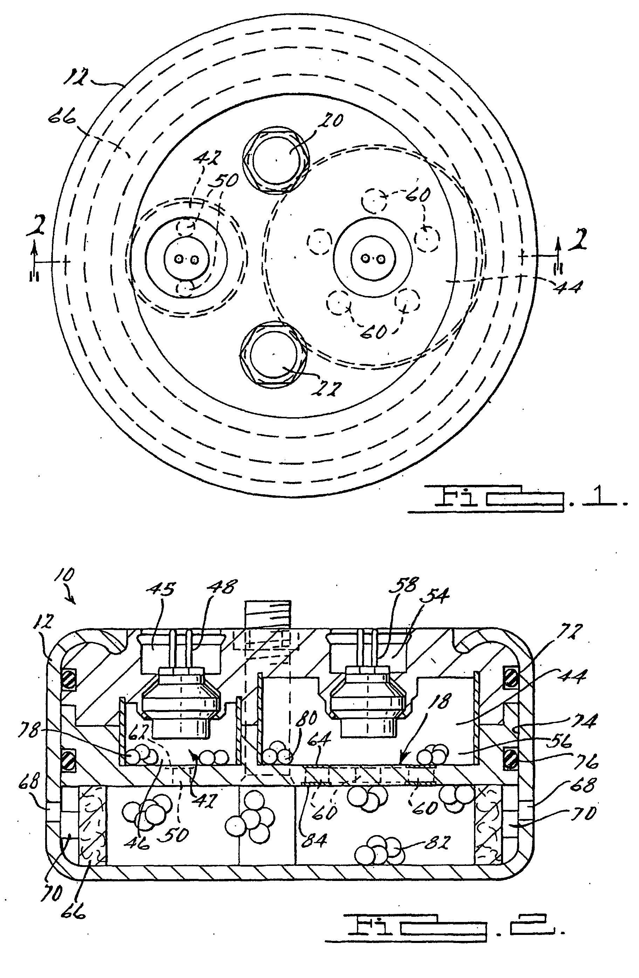

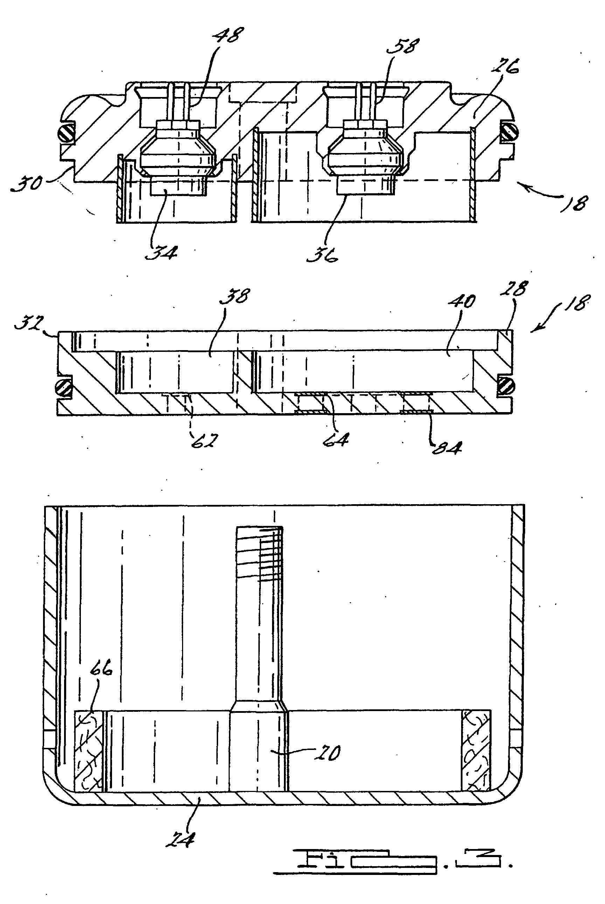

As seen in Fig. 1 of the drawings, an inflator 10, in accordance with a preferred embodiment of the present invention, contains a housing 12, a two-section igniter assembly 18 centrally disposed of the housing 12 and defining dual chambers 42 and 44, a pair of igniters 48 and 58, and an annular filter 66.

The inflator housing or monolith 12 is preferably formed from steel extrusion or other known methods and materials. Support standoffs 20 and 22 are welded to the bottom 24 of housing 12 and secured by locknut to the igniter assembly 18, whereby the support standoffs strengthen the structural integrity of the inflator 10. Igniter or ignition assembly 18 is formed by bonding or press-fitting two sections 26 and 28 to one another in nested relationship. The first section 26 contains an aperture 30 for the acceptance or coupling of a protrusion 32 of the section 28. Sections 26 and 28 are formed by stamping or molding a suitable substrate such as, but not limited to steel, aluminum, or polymer.

First section 26 is preferably extruded from aluminum and contains a first open-ended annulus 34 and a second open-ended annulus 36. Second section 28 is also preferably extruded from aluminum and contains a third annulus 38 and a fourth annulus 40, wherein the third and fourth annuli are open at their respective proximate ends and are substantially but not completely closed at their respective distal ends.

As shown in the Figures, a first igniter chamber 42 is formed when the first and third annuli or the first and third annular walls, substantially equal in circumference, are axially aligned upon joining of the sections 26 and 28. Correspondingly, a second igniter chamber 44 is formed when the second and fourth annuli or second and fourth annular walls, also substantially equal in circumference, are axially aligned upon joining of the sections 26 and 28. As shown in the Figures, chamber 42 indicates a smaller circumference than chamber 44, but is not thereby limited.

Chamber 42 contains a proximate end 45 and a distal end 46. A first igniter 48 is inserted through the proximate end 45 and is thereby disposed within chamber 42. Igniter 48 is then preferably crimped to section 26. A first plurality of gas exit apertures 50 extend through distal end 46 thereby facilitating fluid communication between chamber 42 and a primary propellant or primary gas generant chamber 52.

Chamber 44 contains a proximate end 54 and a distal end 56. A second igniter 58 is inserted through the proximate end 54 and is thereby disposed within chamber 44. Igniter 58 is then preferably crimped to section 26. A second plurality of gas exit apertures 60 extends through distal end 56 thereby facilitating fluid communication between chamber 44 and the primary gas generant chamber 52.

A first aluminum shim 62 preferably covers apertures 50 thereby sealing chamber 42. A second aluminum shim 64 covers apertures 60 thereby sealing chamber 44.

An annular filter 66 is peripherally and radially spaced from a central axis of chamber 52. As shown in the Figures, the primary propellant chamber 52 is formed when the ignition assembly 18 is placed atop the filter 66 within the housing 12.

A third plurality of gas exit apertures 68 are circumferentially disposed within the housing 12 and about the chamber 52, thereby providing fluid communication between the chamber 52 and an airbag (not shown). A plurality of burst shims 70 correspond to and cover each aperture in the third plurality of apertures 68, thereby sealing chamber 52.

A first 0-ring or seal 72 preferably seals the interface between the first section 26 and an inner wall 74 of the housing 12. A second 0-ring or seal 76 preferably seals the interface between the second section 28 and the inner wall 74.

A first ignition compound or initiator composition 78 is provided within the first chamber 42. A second initiator composition 80, the same as or different from composition 78, is provided within the second chamber 44. A primary propellant or gas generant composition 82 is provided within the chamber 52.

To join the various subassemblies, the filter 66 is first inserted within the housing 12. The propellant 82 is then inserted into chamber 52. A complete igniter assembly 18 is then loaded atop the filter 66 within the housing 12. Housing 12 is then circumferentially crimped over the first section 26 thereby sealing the inflator 10. Manufacture is thus simplified by minimizing the number of weld points required.

In operation, a vehicle occupant protection system generates a signal indicating sudden deceleration or a crash event that is then sensed by igniter 48 thereby triggering ignition of the first initiator propellant 78. Upon ignition of composition 78, the combustion gases create a pressure that ruptures the first aluminum shim 62. Heat, flame, and gases then flow from chamber 42 into chamber 52 thereby igniting the main propellant charge 82. Combustion pressure then ruptures burst shims 70 whereby gases then flow from chamber 52 through filter 66, then through apertures 68, and into an airbag.

The second chamber 44 is selectively operative based on factors such as crash severity, occupant position sensing, and the weight and/or height of the occupant. Therefore, a shield 84 (preferably made from stainless steel) further covers apertures 60 thereby functioning as a heat and pressure shield. Shield 84 thus prevents inadvertent or undesirable ignition of the second initiator composition 80 caused by flame front, gas, and heat propagation within chamber 52.

It will be appreciated, however, that chambers 42 and 44 may be operated simultaneously, individually operated, or within a timed interval of each other. For example, chamber 42 may be singularly initiated in lieu of chamber 44, given a minimal weight of the occupant. Shield 84 thus preserves independent operation of each chamber but does not inhibit or delay the simultaneous operation of each chamber if desired.

The wire mesh filter 66 can be formed from multiple layers or wraps of metal screen, for example. Although not limited thereby, U.S. Patent Nos. 6,032,979 and 5,727,813 illustrate typical metal filters. Other features of the present invention are well known in the art. For example, but not by way of limitation, the propellant or gas generant composition and the ignition compounds may be formulated as described in co-owned U.S. Patent No. 5,035,757.

It will be understood that the foregoing description of the preferred embodiment of the present invention is for illustrative purposes only. As such, the various structural and operational features herein disclosed are susceptible to a number of modifications commensurate with the abilities of one of ordinary skill in the art, none of which departs from the scope of the present invention as defined in the appended claims.

## Claims

1. An inflator (10) for a vehicle occupant protection system comprising:
a housing (12) comprising a plurality of gas exit apertures (68) spaced therein, said housing forming a primary propellant chamber (52);
a first chamber (42) and a second chamber (44), said first chamber (42) and/or said second chamber (44) in fluid communication with said primary propellant chamber (52) upon inflator operation;
a first initiator (48) and a second initiator (58) contained within the first chamber (42) and the second chamber (44) respectively; and
a first ignition compound (78) and a second ignition compound (80) within said first (42) and second (44) chambers respectively, wherein upon inflator operation said first (48) and/or said second (58) initiators ignite said first (78) and/or said second (80) ignition compounds, respectively; **characterized by**
an initiator assembly (18) comprising a first component (26) and a second (28) component coupled together in nested relationship, said assembly (18) fixed within said housing (12) in a sealing engagement and over said primary propellant chamber (52), wherein the first and second chambers (42, 44) are formed between said first (26) and second (28) components; and
a primary gas generant composition (82) contained within said primary propellant chamber (52), said primary gas generant composition (82) being combustible upon ignition of said first (78) and/or said second (80) ignition compounds wherein gases produced from said primary gas generant composition (82) exit said plurality of gas exit apertures (68).

2. An inflator (10) for a vehicle occupant protection system comprising:
a housing (12) containing a primary propellant chamber (52) formed therein;
an ignition assembly (18) fixed within said housing (12), the ignition assembly (18) comprising a first component (26) and a second component (28) coupled together to form a first ignition chamber (42) and a second ignition chamber (46);
a first igniter (48) contained within the first ignition chamber (42);
a second igniter contained within the second ignition chamber (44);
a first ignition compound (78) contained within said first ignition chamber (42) and ignitable by said first igniter (48) wherein said first ignition chamber (42) fluidly communicates with said primary chamber (52) upon ignition of said first ignition compound (78); and
a second ignition compound (80) contained within said second ignition chamber (44) and ignitable by said second igniter (58) wherein said second ignition chamber (44) fluidly communicates with said primary chamber upon ignition of said second ignition compound (80); **characterized in that**:
the primary chamber (52) is a primary propellant chamber (52) containing a primary gas generant composition (82), said primary gas generant composition (82) being combustible upon ignition of said first (78) and/or said second (80) ignition compounds; and
the first component (26) and second component (28) are coupled together in nested relationship, within and in a sealing engagement with said housing (12) and over said primary propellant chamber (52); wherein
a first annular wall and a second annular wall are formed within said first component (26); and
a third annular wall (38) and a fourth annular wall (40) are formed within said second component (28), said first and third (38) walls circumferentially equivalent and in axial alignment, and said second and fourth (40) walls circumferentially equivalent and in axial alignment, wherein said first and third (38) walls form the first ignition chamber (42) and said second and fourth walls (40) form the second ignition chamber (44).

## Patentansprüche

1. Gasgenerator (10) für ein Fahrzeuginsassenschutzsystem, mit:
einem Gehäuse (12), welches mehrere darin beabstandet ausgebildete Gasauslassöffnungen (68) aufweist, wobei das Gehäuse eine Primärtreibmittelkammer (52) bildet,
einer ersten Kammer (42) und einer zweiten Kammer (44), wobei die erste Kammer (42) und/oder die zweite Kammer (44) im Betrieb des Gasgenerators in Fluidverbindung mit der Primärtreibmittelkammer (52) stehen,
einem ersten Zünder (48) und einem zweiten Zünder (58) in der ersten Kammer (42) bzw. der zweiten Kammer (44), und
einem ersten Zündmittel (78) und einem zweiten Zündmittel (80) in der ersten Kammer (42) bzw. der zweiten Kammer (44), wobei im Betrieb des Gasgenerators der erste Zünder (48) und/oder der zweite Zünder (58) das erste Zündmittel (78) und/oder das zweite Zündmittel (80) zünden,
**gekennzeichnet durch** eine Zünderbaugruppe (18) mit einer ersten Komponente (26) und einer zweiten Komponente (28), die ineinander geschachtelt miteinander verbunden sind, wobei die Baugruppe (18) in dem Gehäuse (12) in dichtendem Eingriff und über der Primärtreibmittelkammer (52) befestigt ist, wobei die erste Kammer (42) und zweite Kammer (44) zwischen der ersten Komponente (26) und der zweiten Komponente (28) ausgebildet sind, und
eine Hauptgaserzeugungsverbindung (82) in der Primärtreibmittelkammer (52), wobei die Hauptgaserzeugungsverbindung (82) bei einer Zündung des ersten Zündmittels (78) und/oder des zweiten Zündmittels (80) verbrennbar ist, wobei von der Hauptgaserzeugungsverbindung (82) erzeugte Gase **durch** die mehreren Gasauslassöffnungen (68) austreten.

2. Gasgenerator (10) für ein Fahrzeuginsassenschutzsystem, mit:
einem Gehäuse (12), welches eine darin ausgebildete
einem zweiten Zündmittel (80) in der zweiten Zündkammer (44), welches von dem zweiten Zünder (58) zündbar ist, wobei die zweite Zündkammer (44) beim Zünden des zweiten Zündmittels (80) in Fluidverbindung mit der Hauptkammer steht,
**dadurch gekennzeichnet, dass** die Hauptkammer (52) eine Haupttreibmittelkammer (52) ist, die eine Hauptgaserzeugungsverbindung (82) enthält, wobei die Hauptgaserzeugungsverbindung (82) beim Zünden des ersten Zündmittels (78) und/oder des zweiten Zündmittels (80) verbrennbar ist, und
die erste Komponente (26) und die zweite Komponente (28) in dem und in dichtendem Eingriff mit dem Gehäuse (12) und über der Haupttreibmittelkammer (52) ineinander geschachtelt miteinander verbunden sind, wobei
eine erste ringförmige Wand und eine zweite ringförmige Wand in der ersten Komponente (26) ausgebildet sind, und
eine dritte ringförmige Wand (38) und eine vierte ringförmige Wand (40) in der zweiten Komponente (28) ausgebildet sind, wobei die erste Wand und die dritte Wand (38) in Umfangsrichtung entsprechend und axial fluchtend angeordnet sind und die zweite Wand und die vierte Wand (40) in Umfangsrichtung entsprechend und axial fluchtend angeordnet sind, wobei die erste Wand und die dritte Wand (38) die erste Zündkammer (42) bilden und die zweite Wand und die vierte Wand (40) die zweite Zündkammer (44) bilden.

## Revendications

1. Dispositif de gonflage (10) pour un système de protection d'occupant de véhicule comprenant :
un logement (12) comprenant une pluralité d'ouvertures de sortie de gaz (68) espacées en lui, ledit logement formant une chambre primaire de gaz propulseur (52) ;
une première chambre (42) et une seconde chambre (44), ladite première chambre (42) et/ou ladite seconde chambre (44) étant en communication fluide avec ladite chambre primaire de gaz propulseur (52) lors du fonctionnement du dispositif de gonflage ;
un premier initiateur (48) et un second initiateur (58) contenus respectivement dans la première chambre (42) et la seconde chambre (44) ; et
un premier composé d'allumage (78) et un second composé d'allumage (80) respectivement dans lesdites première (42) et seconde (44) chambres, dans lequel lors du fonctionnement du dispositif de gonflage lesdits premier (48) et/ou second (58) initiateurs allument respectivement lesdits premier (78) et second (80) composés d'allumage ; **caractérisé en ce que**
un ensemble initiateur (18) comprenant un premier composant (26) et un second composant (28) couplés ensemble en relation imbriquée, ledit ensemble (18) étant fixé dans ledit logement (12) en prise étanche et sur ladite chambre primaire de gaz propulseur (52), dans lequel les première et seconde chambres (42, 44) sont formées entre lesdits premier (26) et second (28) composants ; et
une composition génératrice de gaz primaire (82) contenu dans ladite chambre primaire de gaz propulseur (52), ladite composition génératrice de gaz primaire (82) étant combustible lors de l'allumage dudit premier (78) et/ou dudit second (80) composés d'allumage dans lequel les gaz produits à partir de la composition génératrice de gaz primaire (82) sortent par la pluralité d'ouvertures de sortie de gaz (68).

2. Dispositif de gonflage (10) pour un système de protection d'occupant de véhicule comprenant :
un logement (12) comprenant une chambre primaire de gaz propulseur (52) formée en lui ; un ensemble d'allumage (18) fixé dans ledit logement (12), l'ensemble d'allumage (18) comprenant un premier composant (26) et un second composant (28) couplés ensemble pour former une première chambre d'allumage (42) et une seconde chambre d'allumage (46) ;
un premier allumeur (48) contenu dans la première chambre d'allumage (42) ;
un second allumeur contenu dans la seconde chambre d'allumage (44) ;
un premier composé d'allumage (78) contenu dans ladite première chambre d'allumage (42) et pouvant être allumé par ledit premier allumeur (48) dans lequel ladite première chambre d'allumage (42) est en communication fluide avec ladite chambre primaire (52) lors de l'allumage dudit premier composé d'allumage (78) ; et
un second composé d'allumage (80) contenu dans ladite seconde chambre d'allumage (44) et pouvant être allumé par ledit second allumeur (58) dans lequel ladite seconde chambre d'allumage (44) est en communication fluide avec ladite chambre primaire lors de l'allumage dudit second composé d'allumage (80) ; **caractérisé en ce que** :
la chambre primaire (52) est une chambre primaire de gaz propulseur (52) contenant une composition génératrice de gaz primaire (82), ladite composition génératrice de gaz primaire (82) pouvant s'allumer lors de l'allumage desdits premier (78) et/ou second (80) composés d'allumage ; et
le premier composant (26) et le second composant (28) sont couplés ensemble en relation imbriquée à l'intérieur de et en prise étanche avec ledit logement (12) et sur ladite chambre primaire de gaz propulseur (52), dans lequel
une première paroi annulaire et une seconde paroi annulaire sont formées dans ledit premier composant (26) ; et
une troisième paroi annulaire (38) et une quatrième paroi annulaire (40) sont formés dans ledit second composant (28), lesdites première et troisième parois (38) étant circonférentiellement équivalentes et en alignement axial, et lesdites seconde et quatrième (40) parois étant circonférentiellement équivalentes et en alignement axial, dans lequel lesdites première et troisième (38) parois forment la première chambre d'allumage (42) et lesdites seconde et quatrième parois (40) forment la seconde chambre d'allumage (44).
